# EUROPEAN PATENT SPECIFICATION

(11) **EP 1 970 181 B1**
(45) Date of publication and mention of the grant of the patent: **20.01.2010**
(21) Application number: 07005185.9
(22) Date of filing: 13.03.2007
(51) Int. Cl.: B29B 11/14, B29C 49/00, B65D 1/02, B29C 49/06, B29B 11/08, B29C 49/22

(54) **Preform for blow moulding a container**
Vorformling zum Blasformen eines Behälters
Préforme pour le moulage par soufflage d'un conteneur

(43) Date of publication of application: 17.09.2008
(73) Proprietor: SOCIEDAD ANONIMA MINERA CATALANO-ARAGONESA (SAMCA), 44547 Arino Teruel (ES)
(72) Inventor: Leza Roa, Fortun, 44547 Ariño (Teruel) (ES); Martin Pérez, Mariano, 44547 Ariño (Teruel) (ES); Berbegal Lapresta, Luisa, 44547 Ariño (Teruel) (ES); Caballero López, Miguel Angel, 44547 Ariño (Teruel) (ES)
(74) Representative: Schäfer, Matthias W.

(56) References cited:
- EP-A- 1 541 623
- WO-A-2006/017597
- WO-A1-99/61245
- JP-A- 4 114 057

## Description

As indicated in the title, the present description refers to a preform for blow moulding a container, of the type used for the manufacture of containers destined to contain food, dairy products, oil products and others that contain active principles that may be affected by light radiation, characterised in that it includes at least two layers formed by means of co-injection or overmoulding techniques, each consisting of a composition of Polyethylene Terephthalate (better known as PET), titanium dioxide (TiO₂) and a dye with a light-absorbing capacity in the visible spectrum wavelength range that is between 400 nm (nanometres) and 700 nm, such as carbon-black, grey dye, amber dye or brown dye, the weight percentage of the light-absorbing dye that is present in the inner layer being, in the preferential embodiment, greater than that in the outer layer, although the difference in concentrations of the light-absorbing active principle is no greater than 0.2% weight between both layers.

In the case described, a container is intended in which the maximum light radiation transmission through the wall is less than 0.1% for a total wall thickness of 0.22 mm (millimetres), this thickness being understood to be the sum of the partial thicknesses provided by all of the layers that form the wall, maintaining a white outer appearance in the finished container destined for the dairy market, or other opaque colours that are equally reflective for other markets.

The useful lifetime intended with this application for products that are sensitive to light radiation, UHT-treated milk being the most sensitive product, is more than 120 days. This represents an expected increase in product lifetime of more than three months since, in Polyethylene Terephthalate (PET) not additivated for this purpose, lifetimes of over two weeks cannot be guaranteed for products such as UHT milk. Other single-layer solutions with large additivations of a screening agent have been shown to be effective for up to four months but cannot provide a total screen for any longer times in functionally viable solutions.

At present it is widely known that there are numerous, different types of containers produced by mould blowing using a preform. Most of these preforms are made of Polyethylene Terephthalate (PET) due to this material's characteristics of transparency, light weight, low cost, excellent mechanical and gas barrier properties and the facility with which it can subsequently be recycled into RPET. An example of this type of single-layer preform is described in PCT Patent applicationUS2004/005890 "Container preform assembly and method of manufacture", which proposes a typical preform in one single layer, with a separately injected neck.

However, for a large number of products, especially UHT-treated milk and other long-life dairy products, transparency is not suitable since certain vitamins, basically E-group vitamins, as well as certain proteins and fats, are degraded by the effect of light, altering the original organoleptic and nutritional characters a few days after bottling. Other alternatives to increase the light screen of PET are known, such as that described in US Patent 7150902 "High T.sub.g coatings" or in European Patent 0 696 953 "Hollow containers with inert or tight surface layer", that aim to apply, to a conventional preform or similar plastic object, a coating of a different material that may contain an additive or dye. However, the result of this type of procedure is not optimum either in terms of mechanical properties or light-screening properties and it does not resolve the problem. It is also known that there are compounds, such as that described in European Patent 1541623 "Photoprotective composition for food containers" that claims a compound of aluminium powder and pearlised dye which makes plastic opaque and which is added to the plastic material itself, to increase lifetime by up to three weeks, but which does not allow the objective of the aforementioned 120 days to be reached.

To resolve this problem there is the commonly known practice of manufacturing the container using complex multi-layer preforms employing co-injection or overmoulding in which two, three or five layers are formed, three being the most probable solution, so that in this composition of, for example, three layers, the intermediate layer has a different composition to the outer and inner layers, both of the latter having the same composition. Normally, in the use of light-screen oriented co-injection, the basic material is PET, which is mixed differently in the different layers: the outer and inner layers with a white dye, usually Ti02, and the intermediate layer with black dye. Also, in the case of overmoulding, it is normally the heavily black-dyed inner layer that guarantees the light screen, whilst the outer layer conceals the dark colour providing a white appearance on the containers' visible surface.

Examples of these preforms with at least three layers can be found in European Patent 0 722 887 "Plastic material container", in PCT Patent application 00/09575 "Apparatus and method for making barrier-coated polyester", and in US Patent 6352426 "Mold for inyection molding multilayer preforms". These documents describe different embodiments of multilayer preforms with different compositions in each layer, by the addition of a coating of different barrier materials to one of the PET layers. In some cases, such as that of European Patent 1681239 "Preform, method for producing a preform and a container", it is specifically a two or three-layer multilayer preform with a specific light barrier layer of a different composition to the other layers.

The basic problems involved in the three-layer solution (conventional co-injection) are: a reduction (of up to 25%) in production performance of preform forming systems compared to similar single-layer preforms; the extensive maintenance that the moulds require, especially the hot runners that distribute the molten material; the difficulties in guaranteeing a uniform quality of preforms due to the fact that the depth and relative location of the intermediate screening layer are sensitive to process conditions and the difficulties in ensuring compatibility between the intermediate layer and the surrounding layers which frequently results in imbalances in subsequent container-forming processes carried out by blowing and in delamination due to lack of adherence caused by the different composition of layers. This type of known multilayer embodiment (with outer layer, intermediate layer and inner layer) presents considerable problems in that, due to their different compositions, the layers behave differently when stretched during the blowing phase (that is, in the final forming of the container or bottle). One layer stretches more than the other, which means that we cannot obtain an evenly stretched container and that there are layers are not totally bonded. This problem is known as "delamination" and it causes a great number of faulty end products, with the high economic cost that this entails. Moreover, air pockets normally form between the layers and this can cause subsequent contamination. Another added problem is cracking, which occurs during the final cooling of the container because the layers have different dilation coefficients. This means that cooling does not take place at the same speed and that one layer may cause another to fracture in a reticular pattern, affecting the container's mechanical characteristics.

An attempt has been made to minimise these problems by reducing the number of layers to two. Some of the two-layer solutions that can be found, for example in European Patent 1547768 "Method of improving the environmental stretch crack resistance of RPET without solid stating" or in Patent JP2002337217 "PET two-layered stretch blow-molded container" describe an inner PET layer that reinforces an outer layer of recycled RPET material as a structural reinforcement and to isolate the bad properties of RPET when considering foodstuffs, meaning that they are not specifically aimed at light screening but rather at providing structural reinforcement.

Other solutions available already include layers that act as a barrier against different elements. For example, PCT Patent application US2006/014300 *"A coated article"* proposes an article with two layers, one that carries out the function of a gas barrier and the other that is waterproof, both made of different materials. US Patent 6391408 *"Coated polyester preforms and method of making same"* uses one layer of PET and another layer of a different material that is a barrier material. US Patent 6312641 *"Method of making containers and preforms incorporating barrier materials"* claims the preform manufacturing procedure that can optionally incorporate a layer of barrier material that is different from the main material. All of these two-layer solutions use different material compositions in the two layers so that in spite of achieving light screening with the use of appropriate additives they still present the same delamination and cracking problems that have been commented on in the case of three-layer preforms and thus the solution obtained is far from being industrially viable.

WO 99/61245 A1 discloses a packaging material including preferably three layers of a plastic material, namely a plastic of the polyolefin type produced by a combined extrusion and blow molding operation. These layers are permanently united with one another. In connection with the intermediate polyolefin layer, carbon black particles and titanium dioxide (Ti02) particles are disclosed.

JP 04 1140576 A refers to a composition for a single layer blow molded bottle. It discloses a composition including PET, TiO2, carbon black and iron oxide.

To resolve the current problems relating to the production of total light-screening containers made by blowing preforms, we have devised the preform for the blow-moulding of a container that is the object of the present invention, and which includes at least two layers and the composition of the layers is identical in at least a 99.8%, being injected by means of over-injection or by co-injection in a suitable mould.

Because all of the layers are made of the same components, they behave as one, both in adherence and stability during processes, eliminating the usual problems of multi-layer preforms.

Each one of the layers consists of a composition of Polyethylene Terephthalate (PET), titanium dioxide (TiO₂) and a dye with a light-absorbing capacity in the visible spectrum wavelength range, that is between 400 nm (nanometres) and 700 nm, such as carbon-black, grey dye, amber dye or brown dye. The only difference between the inner and outer layer is the weight percentage of the light-absorbing dye that is present in the inner layer, which is greater than that of the outer layer but which, in no case, differs by more than 0.2% weight from the former, guaranteeing continuity of composition for the aforementioned purposes as well as allowing the synergistic leveraging of the reflective effects of the outer layer and the absorbent effects of the inner layer added to those already present in the outer layer. This difference means that, in spite of incorporating the same components, the exterior of the container can maintain its characteristic white colour in the finish destined for the dairy market, or other equally reflective opaque colours for other markets, notwithstanding its total light-screening capacity. Preferably the light-absorbing dye used will be carbon black, although the alternative use of grey dye, amber dye or brown dye is contemplated.

The invention that is proposed has the characteristic of providing total light protection against visible light with just two PET layers, since both layers have titanium dioxide and light-absorbing dye such as carbon-black, grey dye, amber dye or brown dye. The outer layer is white in appearance in the case of the finish destined for the dairy market or other equally reflective opaque colours for other markets, since it contains dyes with a capacity for absorption, such as, carbon-black in very low proportions (maximum 20 mg/kg), which does not alter its appearance, whilst in the inner layer the presence of the absorbing pigment is greater (maximum 2000 mg/kg) giving it a pearlised appearance, (if the dye used is carbon-black).

Injection of the preform will be carried out by over-injection or co-injection, both of which are known means for the injecting of several layers.

Although a two layer preform with total light-screening is intended, a planned alternative embodiment may also comprise, between the inner and outer layer, one or several successive intermediate layers of the same composition as the inner layer or the outer layer.

This preform for the blow-moulding of a container offers numerous advantages over those systems currently available, the most important of these being that it provides total light protection from visible light and ultraviolet light with just two layers of PET, since the layers have titanium dioxide and dye with a capacity for light absorption in the visible spectrum wavelength range of between 400 nm (nanometres) and 700 nm, to aid the longer duration and preservation of the products to be contained, especially milk, protecting its organoleptic properties and preventing the degradation of vitamin E due to the effect of the light and thus avoiding the flavour of the end product from being spoilt.

Another important benefit is that, due to the homogenous nature of the material, given that all of the layers comprise the same components, the layers adhere perfectly together, offering great strength and durability and eliminating the usual problems with multi-layer preforms, such as cracking or delamination, allowing a notable reduction in the percentage of faulty products, as well as improving the durability of the container and thus of the product contained.

Another benefit resulting from the aforementioned is a greater simplicity in construction and operation and better results for the end customer.

It is important to highlight that this invention, due to its homogenous structure comprising the same components in its different layers, resolves the problems commonly encountered in known solutions that comprise an outer layer, intermediate layer and inner layer, which, because of their different compositions, behave differently when stretched during the blowing phase, that is, in the final forming of the container or bottle. In these known solutions, the heterogeneous composition of the layers means that it is difficult to obtain uniformly stretched containers and they therefore present deficient screening and preservation characteristics. In this invention, given that the layers of the preform are essentially identical in their composition, they behave in the same way during the blowing phase, with the same stretch coefficient, ensuring perfect adherence between the layers.

It is also important to highlight the advantage represented by the fact that additivation of the light-absorbing dye to the rest of the components can be carried out in the pellets themselves by polycondensation, either in the injection phase, by means of lateral extrusion, using auxiliary spindles to the main ones that inject the melted pellets in the moulds.

Another advantage of the present invention is the total light protection of the mouth of the preform, since the mouth is no longer stretched and because it is thus thicker, the lesser amount of light-absorbing dye in the specific mouth zone will not negatively affect the screening capacity of the container.

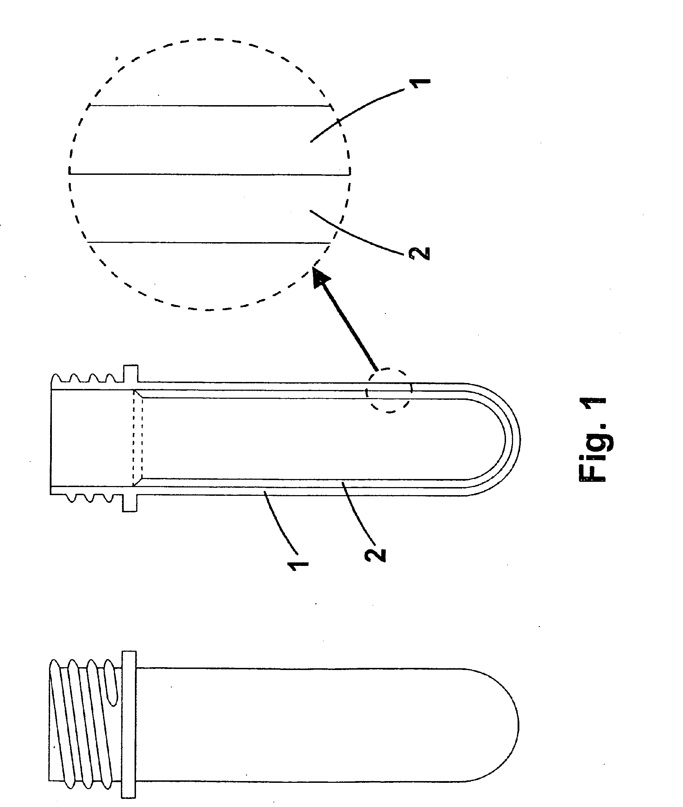

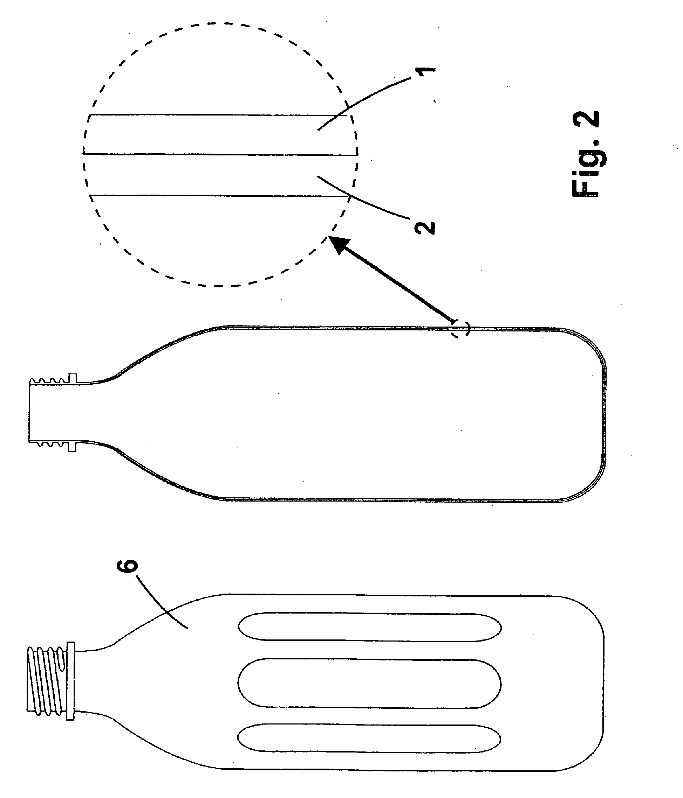

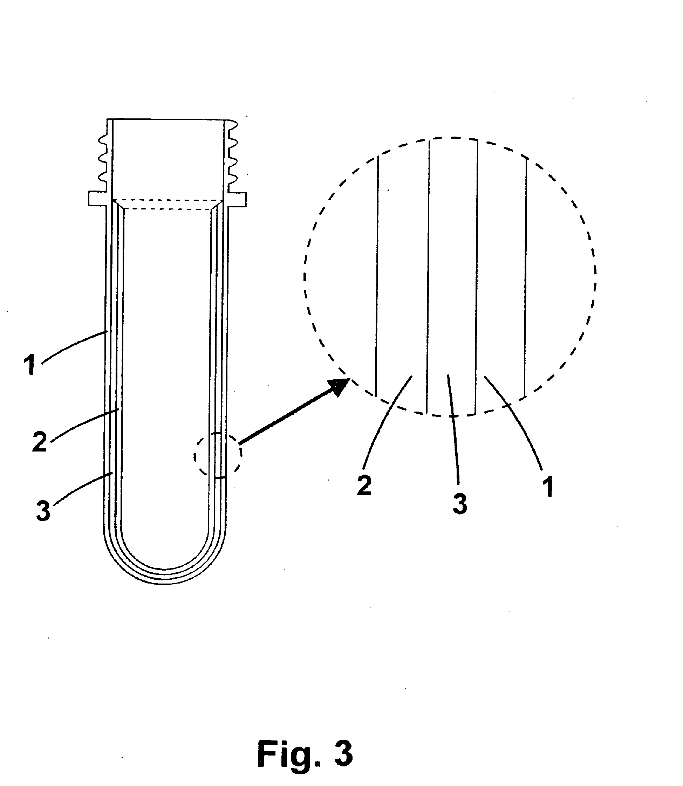

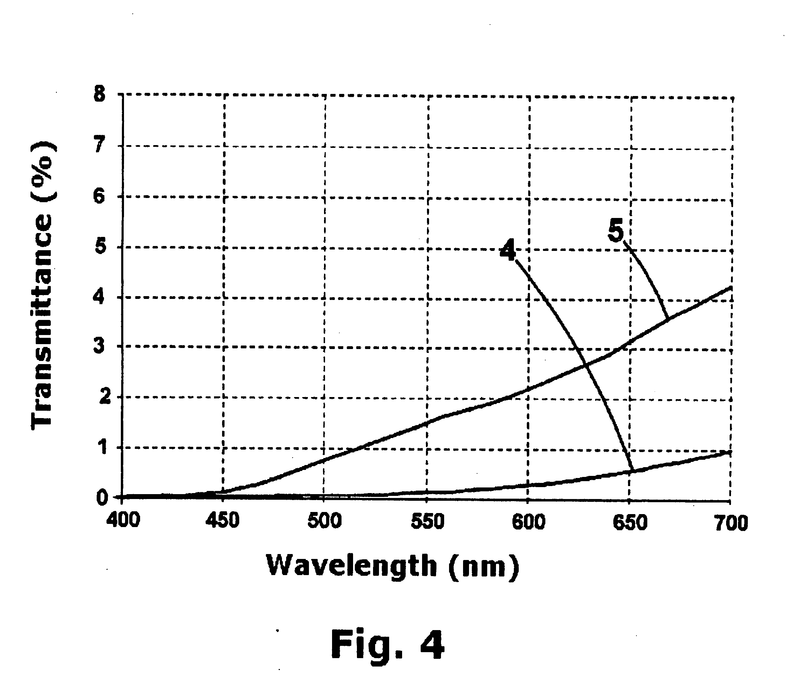

To better understand the object of the present invention, the attached drawing shows an example of the preferential practical embodiment of a preform for the blow moulding of a container with total light screening. In said drawing, figure -1- shows a profile view and cross-section view of an example of the double-layer preform, with a close-up of the wall structure.

Figure -2- shows a profile view and a cross-section view of a container (6) obtained by blowing the two-layer preform, with a close-up of the wall structure.

Figure -3- shows a cross-section view of an example of an alternative embodiment of a three-layer preform, with a close-up of the wall structure.

Figure -4- shows a graph of the screening results obtained in light transmittance tests for different wavelengths using single-layer Polyethylene Terephthalate (PET) bottles, additivated with a 7.5% (5) and 10.5% (4) concentration of TiO₂, both with 10 mg / kg of carbon black.

The preform for blow-moulding a container, that is the object of the present invention, takes a form, as shown in the attached drawing, that is defined by a mainly cylindrical body with a semi-spherical bottom closure and flat, open top end that is surrounded by a external thread and a finishing stop washer and which includes at least two layers (1,2), each of which consists of a composition of Polyethylene Terephthalate (PET), titanium dioxide (TiO₂) and a dye with light-absorbing capacity, the weight percentage of said light-absorbing dye in the inner layer (2) being, in the preferential embodiment, greater that that in the outer layer (1). The light-absorbing dye used will be preferably carbon black, and grey dye, amber dye or brown dye are foreseen as possible alternatives.

The thickness of the inner layer, which has a larger proportion of light-absorbing dye, is between 15% and 45% of the total thickness of the preform, preferably 33%. This percentage has been chosen as optimum for obtaining total light screening, bearing in mind that the preform must have a standard thickness and configuration for its transformation during the subsequent blowing phase.

The injection of the preform will, preferably, take place by overinjection moulding, injecting one layer, cooling, heating the surface and overinjecting a second layer which, due to the homogeneity of the materials aids the perfect adherence between each layer. This overmoulding process can be carried out employing any technology that permits overmoulding injection. As has been stated, the use of alternative processes such as coinjection is not excluded.

This preform will subsequently be used to obtain, by blowing, containers (6) that can be used for milk, foods, oil products and any other product whose active principles may be affected by light radiation.

Each of the layers (1,2) has a weight percentage of titanium (TiO₂) of between 2% and 10%, preferably 6%. This percentage has been chosen as the ideal one to obtain total light screening.

In the outer layer (1) the weight percentage of the light-absorbing dye is between 0.0005% and 0.002%, preferably 0.001%, whilst in the inner layer (2) the weight percentage of the light absorbing dye is between 0.01% and 0.2%, preferably 0.1%. As in the previous case, this percentage has been chosen as optimum for obtaining total light screening.

The light reflection screen provided in the outer layer (1) will be at least 80% (maximum transmittance between 400 and 700 nm of 20%), the rest of the screen being guaranteed by absorption in the inner layer (2). This sum of effects allows the supplementary additive content of the inner layer (2) to be reduced, with the resulting positive consequences: on the one hand, optimisation of the total content of the dyes used, and on the other, maintenance of a continuity in the composition of the different layers (1,2), guaranteeing the planned total screening and providing a white outer appearance in the finish destined for the dairy market or other opaque colours that are equally reflective for other markets, given that the intensity of the dark colour is minimised in the outer layer (1)

Figure -4- shows the results obtained in the tests carried out with single-layer preforms of PET additivated with a 7.5% (5) and 10.5% (4) concentration of TiO₂, both with 10 mg / kg of carbon black, proving that this type of solutions are unable to achieve the screen objective expected for functionally viable containers.

In an alternative embodiment it is foreseen that, between the inner layer (2) and the outer layer (1), there may be one or several successive intermediate layers (3) of the same composition as the inner layer (2) or the outer layer (1).

## Claims

1. Preform for blow moulding a container of the type used for the manufacture of containers destined to contain food, dairy products, oil products and others that contain active principles that may be affected by light radiation, **characterised in that** it includes two layers (1,2), each of which consists of a composition of Polyethylene Terephthalate (PET), titanium dioxide (TiO₂) and a dye with light-absorbing capacity in the visible spectrum wavelength range, that is, between 400 nm (nanometres) and 700 nm.

2. Preform for blow moulding a container, according to the preceding claim, wherein the percentage of light-absorbing dye present in the inner layer (2) is greater than that in the outer layer (1).

3. Preform for blow moulding a container, according to the preceding claims, wherein each of the layers has a weight percentage of titanium dioxide (TiO₂) of between 2% and 10%.

4. Preform for blow moulding a container with total light screening, according to the preceding claims, wherein each of the layers has a weight percentage of titanium dioxide (TiO₂) of 6%.

5. Preform for blow moulding a container, according to the preceding claims, wherein the weight percentage of the light-absorbing dye in the outer layer (1) is between 0.0005% and 0.002%.

6. Preform for blow moulding a container, according to the preceding claims, wherein the weight percentage of the light-absorbing dye in the outer layer (1) is 0.001 %

7. Preform for blow moulding a container, according to the preceding claims, wherein the weight percentage of the light-absorbing dye in the inner layer (2) is between 0.01% and 0.2%

8. Preform for blow moulding a container with total light screening, according to the preceding claims, wherein the weight percentage of light-absorbing dye in the inner layer (2) is 0.1%.

9. Preform for blow moulding a container, according to any of the preceding claims, wherein between the inner layer (2) and the outer layer (1) there is one or several successive intermediate layers (3) with the same composition as the outer layer (1).

10. Preform for blow moulding a container, according to any of the preceding claims 1 to 8, wherein between the inner layer (2) and the outer layer (1) there is one or several intermediate layers (3) with the same composition as the inner layer (2).

11. Preform for blow moulding a container, according to any of the preceding claims, wherein the light-absorbing dye is selected from the group of carbon black, grey dye, amber dye, brown dye.

12. Use of a preform, according to any of the preceding claims, producing a container (6) preferably for milk, foods, oil products and any others that contain active principles that may be affected by light radiation.

## Patentansprüche

1. Vorformling zum Blasformen eines Behälters von der Art, die zur Herstellung von Behältern benutzt wird, die zur Aufnahme von Nahrungsmitteln, Milchprodukten, Ölprodukten und anderen Stoffen gedacht sind, die aktive Komponenten enthalten, welche durch Lichteinstrahlung beeinflusst werden, **dadurch gekennzeichnet, dass** er zwei Schichten aufweist (1, 2), von denen jede aus einer Zusammensetzung aus Polyethylen-Terephtalat (PET), Titandioxid (TiO2) und einem Farbstoff mit Licht absorbierender Eigenschaft im Wellenlängenbereich des sichtbaren Spektrums, also zwischen 400 nm (Nanometern) und 700 nm, besteht.

2. Vorformling zum Blasformen eines Behälters nach dem vorhergehenden Anspruch, wobei der Prozentsatz an Licht absorbierendem Farbstoff, welcher in der inneren Schicht (2) vorhanden ist, größer als derjenige in der äußeren Schicht (1) ist.

3. Vorformling zum Blasformen eines Behälters nach den vorhergehenden Ansprüchen, wobei jede der Schichten einen Gewichtsprozentanteil an Titandioxid (TiO2) zwischen 2% und 10% aufweist.

4. Vorformling zum Blasformen eines Behälters mit vollständiger Lichtabschirmung nach den vorhergehenden Ansprüchen, wobei jede der Schichten einen Gewichtsprozentanteil an Titandioxid (Ti02) von 6% aufweist.

5. Vorformling zum Blasformen eines Behälters nach den vorhergehenden Ansprüchen, wobei der Gewichtsprozentanteil des Licht absorbierenden Farbstoffs in der äußeren Schicht (1) zwischen 0,0005% und 0,002% beträgt.

6. Vorformling zum Blasformen eines Behälters nach den vorhergehenden Ansprüchen, wobei der Gewichtsprozentanteil des Licht absorbierenden Farbstoffs in der äußeren Schicht (1) 0,001 % beträgt.

7. Vorformling zum Blasformen eines Behälters nach den vorhergehenden Ansprüchen, wobei der Gewichtsprozentanteil des Licht absorbierenden Farbstoffs in der inneren Schicht (2) zwischen 0,01 % und 0,2% beträgt.

8. Vorformling zum Blasformen eines Behälters nach den vorhergehenden Ansprüchen, wobei der Gewichtsprozentanteil des Licht absorbierenden Farbstoffs in der inneren Schicht (2) 0,1 % beträgt.

9. Vorformling zum Blasformen eines Behälters nach einem der vorhergehenden Ansprüche, wobei zwischen der inneren Schicht (2) und der äußeren Schicht (1) eine oder mehrere aufeinander folgende Zwischenschichten (3) angeordnet sind, die die gleiche Zusammensetzung wie die äußere Schicht (1) aufweisen.

10. Vorformling zum Blasformen eines Behälters nach einem der Ansprüche 1 bis 8, wobei zwischen der inneren Schicht (2) und der äußeren Schicht (1) eine oder mehrere aufeinander folgende Zwischenschichten (3) angeordnet sind, die die gleiche Zusammensetzung wie die innere Schicht (2) aufweisen.

11. Vorformling zum Blasformen eines Behälters nach einem der vorhergehenden Ansprüche, wobei der Licht absorbierende Farbstoff aus der Gruppe umfassend Ruß, grauer Farbstoff, gelber Farbstoff, und brauner Farbstoff ausgewählt ist.

12. Verwendung einer Vorform nach einem der vorhergehenden Ansprüche zur Herstellung eines Behälters (6) vorzugsweise für Milch, Nahrungsmittel, Ölprodukte und andere Stoffe, die aktive Komponenten enthalten, welche durch Lichteinstrahlung beeinflusst werden können.

## Revendications

1. Une préforme pour le moulage par soufflage d'un conteneur du type de ceux utilisés pour la fabrication de conteneurs destinés à contenir de la nourriture, des produits laitiers, des produits oléagineux, et d'autres contenant des principes actifs qui peuvent être affectés par les rayons lumineux, **caractérisée en ce qu'**elle comporte deux couches (1, 2), chacune d'entre elles étant constituée par une composition de polyéthylène téréphtalate (PET), de dioxyde de titane (TiO₂) et d'une matière colorante présentant une capacité d'absorption de la lumière dans la gamme de longueur d'ondes du spectre visible, c'est-à-dire entre 400 nm (nanomètres) et 700 nm.

2. Une préforme pour le moulage par soufflage d'un conteneur selon la revendication précédente dans laquelle le pourcentage de matière colorante absorbant la lumière présent dans la couche interne (2) est supérieur à celui présent dans la couche externe (1).

3. Une préforme pour le moulage par soufflage d'un conteneur selon les revendications précédentes dans laquelle chacune des couches présente un pourcentage en poids d'oxyde de titane (TiO₂) entre 2% et 10%.

4. Une préforme pour le moulage par soufflage d'un conteneur présentant un écran anti-lumière total selon les revendications précédentes dans laquelle chacune des couches présente un pourcentage en poids de dioxyde de titane (TiO₂) de 6%.

5. Une préforme pour le moulage par soufflage d'un conteneur selon les revendications précédentes dans laquelle le pourcentage en poids de la matière colorante absorbant la lumière présent dans la couche externe (1) est compris entre 0,0005% et 0,002%.

6. Une préforme pour le moulage par soufflage d'un conteneur selon les revendications précédentes dans laquelle le pourcentage en poids de la matière colorante absorbant la lumière présent dans la couche externe (1) est 0,001%.

7. Une préforme pour le moulage par soufflage d'un conteneur selon les revendications précédentes dans laquelle le pourcentage en poids de la matière colorante absorbant la lumière présent dans la couche interne (2) est compris entre 0,01 % et 0,2%.

8. Une préforme pour le moulage par soufflage d'un conteneur présentant un écran anti-lumière total selon les revendications précédentes dans laquelle le pourcentage en poids de la matière colorante absorbant la lumière présent dans la couche interne (2) est 0,1%.

9. Une préforme pour le moulage par soufflage d'un conteneur selon l'une quelconque des revendications ci-dessus dans laquelle, entre la couche interne (2) et la couche externe (1), se trouvent une ou plusieurs couches successives intermédiaires (3) présentant la même composition que la couche externe (1).

10. Une préforme pour le moulage par soufflage d'un conteneur selon l'une quelconque des revendications 1 à 8 dans laquelle, entre la couche interne (2) et la couche externe (1), se trouvent une ou plusieurs couches intermédiaires (3) présentant la même composition que la couche interne (2).

11. Une préforme pour le moulage par soufflage d'un conteneur selon l'une quelconque des revendications ci-dessus dans laquelle la matière colorante absorbant la lumière est sélectionnée parmi un groupe comportant noir de carbone, teinte grise, teinte ambre, teinte brune.

12. Utilisation d'une préforme selon l'une quelconque des revendications précédentes produisant un conteneur (6) destiné à contenir de préférence des produits laitiers, des produits alimentaires, des produits oléagineux et d'autres produits contenant des principes actifs qui peuvent être affectés par les rayons lumineux.
